# EUROPEAN PATENT SPECIFICATION

(11) **EP 3 032 114 B1**
(45) Date of publication and mention of the grant of the patent: **01.03.2017**
(21) Application number: 15446506.6
(22) Date of filing: 27.11.2015
(51) Int. Cl.: F16B 1/00, F16B 25/00

(54) **CONCRETE SCREW**
BETONSCHRAUBE
VIS POUR BÉTON

(30) Priority: 12.12.2014 SE 1451531
(43) Date of publication of application: 15.06.2016
(73) Proprietor: ESSVE Produkter AB, 164 07 Kista (SE)
(72) Inventor: ATHLER, Sebastian, 164 07 Kista (SE); LINDBERG, Chistofer, 164 07 Kista (SE); SVENSSON, Jonas, 164 07 Kista (SE)
(74) Representative: Zacco Sweden AB

(56) References cited:
- DE-A1- 4 016 729
- US-A1- 2011 027 035

## Description

### TECHNICAL FIELD

The present invention relates to a concrete screw adapted to be able to be re-used when mounting building elements to concrete. In particular, the present invention relates to a concrete screw for pre-drilled boreholes in solid hard materials such as concrete or the like.

### TECHNICAL BACKGROUND

When mounting building elements such as railing, pipes and other support structures to concrete foundations metal expanders or special concrete screw may be used. As the concrete is a very hard material a regular screw, such as a wood screw cannot be used as it cannot cut into concrete like it can cut into wood. Usually boreholes are pre-drilled into the concrete, adapted in size to have only the threads of the concrete screws cut into the surrounding concrete. Said pre-drilled boreholes needs to be of the correct size to ensure a secure anchoring in the concrete and that the concrete screw can be inserted into the material without the need to use too much force. There are many problems to overcome when mounting building elements to concrete such as hitting rebars, having too tightly pre-drilled boreholes for the screw or having the pre-drilled boreholes clogged up by too much debris from the pre-drilling.

As concretes screws are rather expensive it is also desirable to be able to re-use them in other mounting assemblies when possible. However, as concrete is a mechanically hard material it might damage the material of the screws used in said hard material. Furthermore, as these types of hard material do not budge to a great degree the torque applied to the screws inserted into said materials is of great importance as a too high momentum will damage the material and/or geometry of the screws rather than pushing it further into the boreholes of the concrete. If re-using a concrete screw which has been mounted with a too high momentum and therefore has degenerated material properties, it may lead to a potentially dangerous situation as the concrete screw might not be able to hold as much load as it would in a unaffected state.

US2011027035 A1 discloses a self-tapping screw comprising a shaft which has a first end and an opposing second end with a load-engaging structure, and a thread that extends at least in sections over the length of the shaft. The self-tapping screw further comprises several wear indicators which are provided on the thread. Identifiers are provided on the screw for identifying the wear indicators. A user who wants to re-use this screw can use the identifiers as guidance to easily see the state of wear by viewing the wear indicators on the thread. This is used as guiding means regarding if the screw can be re-used or not.

There is however a drawback with this type of screw, as it only shows wear and not potential deformation of the material of the screw. If the threads are too damaged a concrete screw cannot be re-used and be expected to hold the same load the screw could hold before the wear but there are also situations where the screw might have flawless threads and still be degenerated in regards to its mechanical properties. If for example a concrete screw has been inserted and mounted into a hole which would prove to be too shallow, thus making the front section of the screw hitting the bottom of the borehole in which it is inserted, then a person executing the mounting might expose the screw for a too high momentum to try to reach the correct insertion depth. This could however lead to torsion of the screw which would enter the plastic deformation area of a stress-strain diagram. Such a screw could look like there is no damage done to it but the material properties could be degenerated to a state where a mounting with said screw could be potentially dangerous as the person performing the mounting believes the screw can hold a higher load than it actually is capable of.

Therefore there is a need to come up with an improved concrete screw for mounting building elements to concrete which eliminates drawbacks with prior art. Further, there is a need for a concrete screw which is easy to use and is reliable when re-using it. There is also a need for a concrete screw which the person using it can easily inspect and evaluate in regards to mechanical and material properties.

### SUMMARY OF THE INVENTION

A concrete screw according to example embodiments of the invention is intended for pre-drilled boreholes rather than being screwed directly into a material. Thus, a concrete screw for pre-drilled boreholes are generally distinguished from screws intended for being advanced into a material by itself, i.e. without pre-drilling a hole for receiving the screw. In addition, a concrete screw is intended for solid hard material such as concrete.

The object of the present invention relates to a concrete screw as defined in the preamble of claim 1, and further defined by the features of the characterizing part of claim 1.

The purpose of the present invention relates to a concrete screw adapted to be able to be re-used multiple times without the running the risk of the screw having sub-par mechanical properties which are left unnoticed. The purpose of the present invention is further to enable a concrete screw which is easily and quickly inspected visually to establish if it can be re-used or not. This is achieved by providing deformation indicator on the concrete screw, which will show if the screw has been strained into plastic deformation or not. The concrete screw according to example embodiments is intended for pre-drilled bores. The concrete screw comprises; a head portion comprising a head member adapted to fit to a mounting tool, a first shaft, substantially uniformly rod shaped having an essentially uniform first diameter, and a second shaft, substantially uniformly rod shaped having an essentially uniform second diameter. The concrete screw further comprises a front section comprising an outer surface and a front end, and threads having an essentially uniform third outer diameter, wherein the threads are arranged on the second shaft and the front section. The concrete screw is characterized in that the first shaft comprises at least one deformation indicator, arranged on the periphery of the first shaft.

This has the advantage that a person using the concrete screw can use the deformation indicators to quickly see if the screw has been deformed and thus mechanically degenerated in previous mounting procedures or not.

According to one aspect of the invention, the at least one deformation indicator extends in an essentially longitudinal direction along the first shaft of the concrete screw.

This has the advantage that the deformation indicator is easy to read and that the threads are not visually in the way when viewing the deformation indicator and evaluating its state. The essentially longitudinal direction of the at least one deformation indicator further has the advantage that an applied torque of the shaft of the concrete screw will deform the screw in a right angle towards said at least one indicator.

According to another aspect of the invention the at least one deformation indicator is formed as at least one projection.

This has the advantage that the at least one deformation indicator will be clearly visible due to being distinguished easy from the rest of the concrete screw. A further advantage is that a projection is easy and therefore cheap to manufacture. As the threads on a concrete screw are projections the manufacturing process can easily be modified to include said projection of the at least one deformation indicator. An even further advantage of forming the deformation indicator as a projection is that the risk of affecting the mechanical properties of the concrete screw is eliminated as there is no reduction in material used to achieve the strength of the screw. In other words. the technical effect associated with the this configuration is to improve the visibility of the deformation indicator from the rest of the concrete screw, whilst ensuring that the mechanical properties of the concrete screw are maintained. As concrete screws are used in very solid materials, thus necessitates pre-drilling, and also often mounted in order to withstand high loads, it is beneficial if the screw can be easily inspected and that any plastic deformation of the screw can be discerned in a reliable manner without requiring any further operations.

According to yet another aspect of the invention, the at least one deformation indicator is formed as at least one recess.

This has the advantage that the at least one deformation indicator can be provided on the concrete screw without the need to use extra material to manufacture the concrete screw.

According to a further aspect of the invention, a plurality of deformation indicators are arranged on the first shaft of the concrete screw.

This has the advantage that the deformation indicators will be easy to see without the need to search for them on the first shaft. It is also advantageous as the extra deformation indicators will act as a backup feature if one deformation indicator would get damaged in a way which is not related to deformation of the mechanical properties of the concrete screw itself.

According to yet a further aspect of the invention, the plurality of deformation indicators comprises at least one pair of deformation indicators.

This has the advantage that the deformation indicators when formed as at least one pair will be easy and efficient to read as their relation to each other will assist the person evaluating the potential deformation gets additional visual cues to add to said evaluation.

According to one aspect of the invention, the plurality of deformation indicators comprises a plurality of pairs of deformation indicators arranged along the periphery of the first shaft of the concrete screw.

This has the advantage that a reading of the deformation indicators can be done all along the perimeter of the concrete screw, creating a very fast and efficient evaluation of the concrete screw.

According to another aspect of the invention the deformation indicator comprises at least one section of surface treated material on the first shaft of the concrete screw.

This has the advantage that the deformation indicators can be added to a concrete screw after the initial manufacturing of said screw. The manufacturing of the deformation indicator may also be performed in very simple and easy accessible ways.

### BRIEF DESCRIPTION OF FIGURES

Preferred embodiments of the invention will be further described with reference to the accompanying drawings.
Figure 1 a shows a perspective view of a concrete screw according to a first embodiment of the present invention.
Figure 1b shows a perspective view of a concrete screw according to a second embodiment of the present invention.
Figure 2a-d schematically shows cross sections of the first shaft of a concrete screw according to a third, fourth, fifth, and sixth embodiment of the present invention.
Figure 3 shows a side view of the first shaft of a concrete screw according to a seventh embodiment of the present invention.
Figure 4a-b schematically shows side views of the first shaft of a concrete screw according to an eight, embodiment of the present invention, before and after deformation.
Figure 5 shows a perspective view of a concrete screw according to a ninth embodiment of the present invention.

### DETAILED DESCRIPTIONS OF THE INVENTION

Herein embodiments of the invention will be described in detail with reference to the appended drawings. As will be perceived the invention can be modified in various ways without derailing from the scope of the claims. Thus the drawings should be viewed upon as illustrative in their nature and not restrictive. All drawings may not be made to scale.

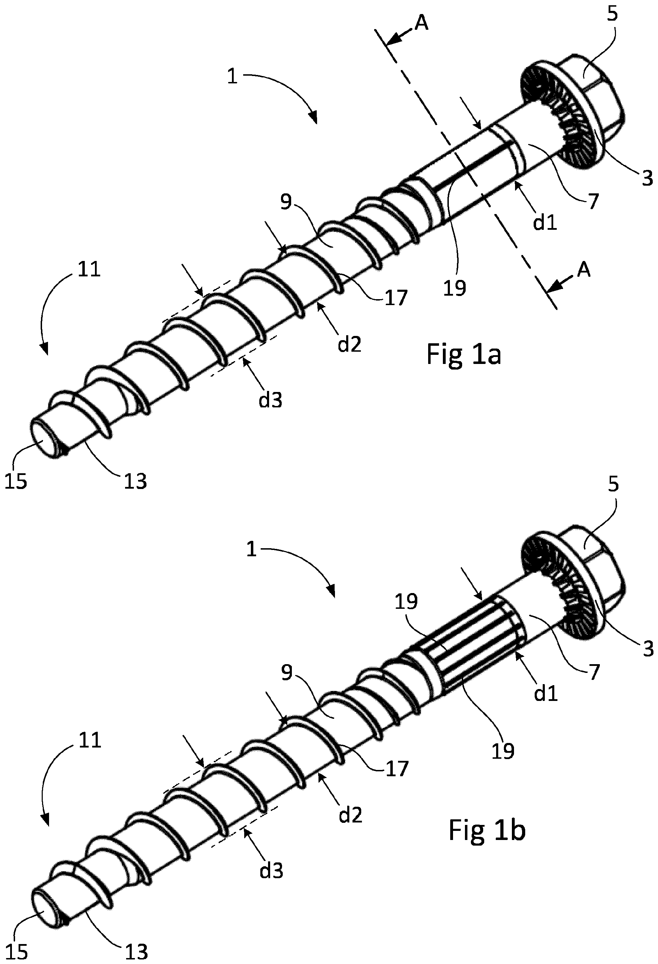

Figure 1a shows a perspective view of a concrete screw 1 according to a first embodiment of the present invention. The concrete screw 1 is adapted to be re-used in multiple mountings of building elements without the risk of using a concrete screw 1 with degenerated mechanical properties. The concrete screw is intended for pre-drilled boreholes. In particular, the concrete screw is intended for being inserted in a pre-drilled borehole for mounting a building element to solid hard material such as concrete. The concrete screw 1 is further adapted to be visually inspected in a fast and efficient manner to evaluate if said screw 1 has degenerated mechanical properties or not. The concrete screw 1 comprises; a head portion 3 comprising a head member 5 adapted to fit to a mounting tool, a first shaft 7, substantially uniformly rod shaped having an essentially uniform first diameter d1, and a second shaft 9, substantially uniformly rod shaped having an essentially uniform second diameter d2. The concrete screw 1 further comprises; a front section 11 comprising an outer surface 13 and a front end 15, and threads 17 having an essentially uniform third outer diameter d3, wherein the threads 17 are arranged on the second shaft 9 and the front section 11. Even further the first shaft 7 of the concrete screw 1 comprises at least one deformation indicator 19, arranged on the periphery of the first shaft 7. In this embodiment of the invention the first shaft 7 of the concrete screw 1 has one deformation indicator 19 arranged on the periphery of said first shaft 7. The deformation indicator 19 extends in an essentially longitudinal direction along the first shaft 7 of the concrete screw 1. This gives a clear visual cue regarding the mechanical properties of said concrete screw 1. If the concrete screw 1 is new and no force has been applied to said screw 1 then the direction of the deformation indicator 19 will be parallel with the outer periphery of the first shaft 7. If however the concrete screw 1 has been used in a previous mounting procedure where it has been exposed to a momentum/torque, large enough for the material of the concrete screw 1 to have been plastically deformed, the direction of the deformation indicator 19 would be non-parallel in regards to the outer periphery of the first shaft 7 due to the mechanical deformation. Depending on the amount of deformation the direction and distribution of the deformation indicator 19 would be slanting or twisted in appearance when comparing it with the outer periphery of the first shaft 7, giving a clear and efficient indication of mechanical deformation of the material of the concrete screw 1. A user would therefore see and know that the concrete screw 1 has be mechanically deformed and that it would not be able to hold the same amount of load as before the deformation. The concrete screw 1 can then be discarded properly and a new screw 1 should be used in its place.

Figure 1b shows a perspective view of a concrete screw 1 according to a second embodiment of the present invention. This second embodiment has the same characteristics and functionality as the first embodiment described accompanying figure 1a, except that a plurality of deformation indicators 19 are arranged on the periphery of the first shaft 7 of the concrete screw. By using a plurality of deformation indicators 19 the safety of the screw 1 can be increased as if one or more deformation indicators 19 are damaged and/or not visible there are more deformation indicators 19 to look at for a user. The inspection and accompanying evaluation may also be faster as the user does not have to turn the concrete screw 1 to find the deformation indicator 19.

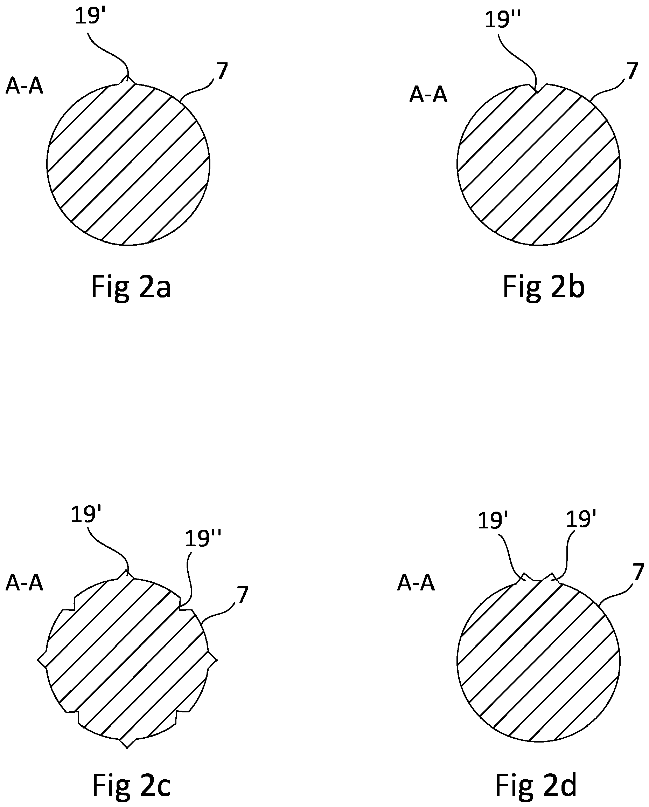

Figure 2a schematically shows a cross section A-A of the first shaft 7 of a concrete screw 1 according to a third embodiment of the present invention. In this embodiment of the invention the deformation indicator 19' is formed as a projection on the periphery of the first shaft 7 of the concrete screw 1. In this embodiment of the invention the projection is formed is an essential triangular shape but the projection may be shaped in other shapes, such as a cuboid, a polygon or have a rounded shape. By forming the deformation indicator 19' as a projection the risk of affecting the mechanical properties of the concrete screw 1 is eliminated as there is no reduction in material used to achieve the strength of the screw 1. Further, the concrete screw is easy and cheap to manufacture. As the threads on a concrete screw are projections the manufacturing process can easily be modified to include said projection of the at least one deformation indicator.

Figure 2b schematically shows a cross section A-A of the first shaft 7 of a concrete screw 1 according to a fourth embodiment of the present invention. In this embodiment of the invention the deformation indicator 19" is formed as a recess in the periphery of the first shaft 7 of the concrete screw 1. In this embodiment of the invention the recess is formed is an essential triangular shape but the recess may be shaped in other shapes, such as a cuboid, a polygon or have a rounded shape. By forming the deformation indicator 19" as a recess the risk of the deformation indicator 19 being scraped off if exposed to a mechanical external force of some sort is eliminated. The forming of the recess may be as simple as scratching the surface of the first shaft 7 in a controlled manner.

Figure 2c schematically shows a cross section A-A of the first shaft 7 of a concrete screw 1 according to a fifth embodiment of the present invention. In this embodiment of the invention there are eight deformation indicators 19', 19", evenly split between being projection and recess shaped, evenly distributed along the periphery of the first shaft 7 of the concrete screw 1. This embodiment of the invention provides a plurality of ways to inspect and evaluate the state of the mechanical properties of the concrete screw 1.

Figure 2d schematically shows a cross section A-A of the first shaft 7 of a concrete screw 1 according to a sixth embodiment of the present invention. In this embodiment of the invention two deformation indicators 19' are present at the periphery of the first shaft 7 of the concrete screw 1. By having the deformation indicators 19' paired in this way the inspection of the state of the deformation indicators 19' may be simplified to a user as the ridges of the deformation indicators 19' and the low point in between may interact visually to assist the user in the evaluation of the screw 1. The distance between the deformation indicators 19' when paired may preferably be in the range from about 0.5mm up to about 2mm.

The embodiments descried accompanying figures 2a-d are just examples of how the invention may be formed. These shapes may be combined in various ways and the shapes of the projections and recesses may also the altered geometrically. The sizes are also not meant to show the exact proportions of the final product but merely schematically show the concept of the present invention.

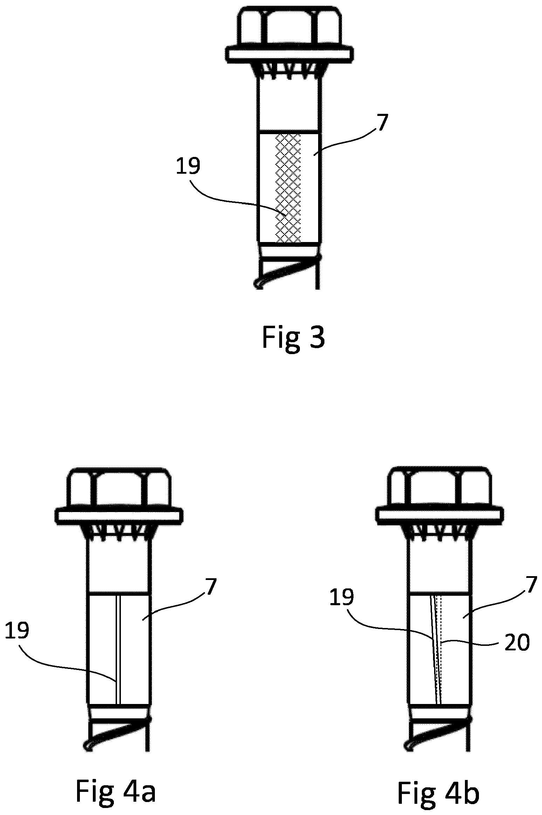

Figure 3 shows a side view of the first shaft 7 of a concrete screw 1 according to a seventh embodiment of the present invention. In this embodiment of the invention the deformation indicator 19 is formed as a section of surface treated material on the first shaft 7 of the concrete screw 1. This section of surface treated material may be produced in various ways, such as painting, applying a rotating wire brush, polishing, embossing or other. By creating the deformation indicator 19 by means of a suitable surface treatment method, the manufacturing process may be simplified as the deformation indicators 19 may even be added after the initial manufacturing process if desired.

Figure 4a-b schematically shows side views of the first shaft 7 of a concrete screw 1 according to an eight, embodiment of the present invention; before and after deformation.

Figure 4a schematically shows a side view of the first shaft 7 of a concrete screw 1 comprising one pair of deformation indicators 19. The screw in figure 4a has not been exposed to any mechanical force and the deformation indicators 19 are therefore parallel with the periphery of the first shaft 7. A user can easily see that this concrete screw is free from mechanical plastic deformation and can hence be used safely for any suitable mounting procedure.

Figure 4b schematically shows a side view of the first shaft 7 of a concrete screw 1 comprising one pair of deformation indicators 19. The screw 1 in figure 4b is the same screw 1 as depicted in figure 4a but after it has been mechanically plastically deformed by means of torque. The deformation indicators 19 now exhibit a slanting appearance compared to their original state, which original state is showed by the dashed lines 20, and are no longer parallel with the periphery of the first shaft 7 of the concrete screw 1. If a concrete screw 1 exhibits this type of appearance when not bearing any load it is apparent that the concrete screw 1 has suffered a plastic deformation and a user should discard it and use another screw 1 in its place. A plastic deformation indicates that the mechanical properties may have been severely altered and that the screw might no longer be able to hold the amount of load it is supposed to.

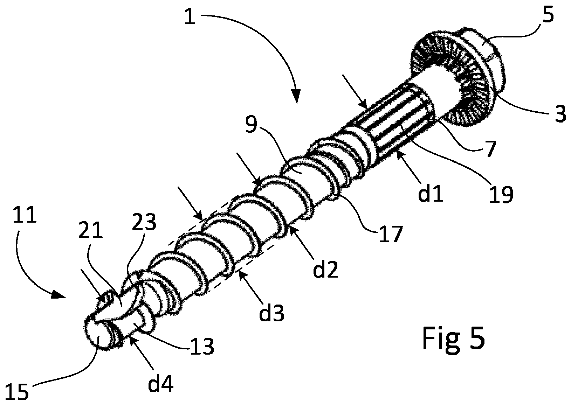

Figure 5 shows a perspective view of a concrete screw 1 according to a ninth embodiment of the present invention. This ninth embodiment has the same characteristics and functionality as the second embodiment described accompanying figure 1b in regards to the deformation indicators 19. In this ninth embodiment of the invention the outer surface 13 of the front section 11 has a fourth diameter d4, smaller than the first, second and third diameters d1, d2, d3, and the threads 17 keep their third outer diameter d3 on the smaller fourth diameter d4 of the front section 11. In this embodiment of the invention the outer surface 13 of the front section 11 further comprises a recess 21 adapted for moving debris in a borehole wherein the screw 1 is being inserted, wherein said debris is moved in an initial direction from the front end 15 towards the head portion 3 of the concrete screw 1. The recess 21 of this embodiment has a semi-circular surface 23, wherein the intersection of the semi-circular surface 21 and the front end 15 of the front section 11 forms a sharp angle. This intersection of the semi-circular surface 23 and the front end 15 of the front section 11 forming a sharp angle will act as a vane when the front end 15 of the concrete screw 1 engages the potential debris at the bottom of the borehole in which the concrete screw 1 is being mounted into. The diameter reduction of the front section 11, in relation to the first and second shafts 7, 9 of the concrete screw 1 creates a space for the concrete debris of the borehole to fill up and the suitably semi-circular surface 23 of the front section 11 assists in relocating said debris from the front end 15 of the concrete screw 1 to said space around the front section 11. The space for the debris is in other words the volume between the sides of the borehole in which the concrete screw is mounted and the outer surface 13 of the front section 11 of the concrete screw 1. As the debris in the borehole can be relocated to said volume there is no need to clean out said debris and there is also no need to pre-drill the borehole deeper than necessary in relation to the length of the threads 17 of the concrete screw 1, which threads 17 are the dominating factor for how much load the concrete screw 1 can hold when mounted. The threads 17 of the front section 11 keeping their outer third diameter d3 even though the fourth diameter d4 of the front section 11 is smaller than the threaded second shaft 9 of the concrete screw 1 give the concrete screw 1 the same load bearing properties as if there would not be any reduction in diameter along the concrete screw 1. These combined features gives a concrete screw 1 with good load bearing properties but eliminates the time consuming job of cleaning out debris in the boreholes before mounting the screw 1. The pre-drilling process is also made more efficient as there is no need to drill deeper than necessary to create space for debris as an alternative method of not cleaning out said debris. The embodiment described here may have more than one recess 21; two recesses 21 may very well be arranged on opposite sides of the concrete screw 1 to increase the debris moving effect of the invention. The recess 21 may also have other shapes than a recess 21 comprising a semi-circular surface 23, such as a flat slanting surface, wherein the intersection of the slanted surface and the front end creates a preferably sharp angle. Embodiments comprising no recess 21 but which embodiments comprise a front section 11 with a fourth diameter d4, smaller than the first, second and third diameters d1, d2, d3 is also possible. The front section may be formed as an substantially uniformly shaped rod with the fourth diameter d4 being an essentially uniform diameter, or it may be formed as a truncated cone with the fourth diameter d4 of the front section 11 being a decreasing diameter, wherein said fourth diameter d4 decreasing in a direction towards the front end 11. The length of the front section 11 may vary in the range of from about 12% up to about 30% of the length of the threaded parts of the concrete screw 1, and more preferably in the range of from about 20% up to about 25% of the length of the threaded parts of the concrete screw 1. This is a large enough portion to achieve the desired space for the debris in the borehole but will not weaken the mechanical properties of the concrete screw 1 as a whole in a significant way.

The invention is not limited to the specific embodiments presented. Combinations of features between different embodiments are possible. Accordingly, the drawings and the description thereto are to be regarded as illustrative in nature, and not restrictive.

## Claims

1. Concrete screw (1) for pre-drilled boreholes, comprising;
a head portion (3) comprising a head member (5) adapted to fit to a mounting tool,
a first shaft (7), substantially uniformly rod shaped having an essentially uniform first diameter (d1),
a second shaft (9), substantially uniformly rod shaped having an essentially uniform second diameter (d2),
a front section (11) comprising an outer surface (13) and a front end (15), and threads (17) having an essentially uniform third outer diameter (d3), wherein the threads (17) are arranged on the second shaft (9) and the front section (11),
**characterized in that** the first shaft (7) comprises at least one deformation indicator (19), arranged on the periphery of the first shaft (7).

2. Concrete screw (1) according to claim 1, wherein the at least one deformation indicator (19) extends in an essentially longitudinal direction along the first shaft (7) of the concrete screw (1).

3. Concrete screw (1) according to claim 2, wherein the at least one deformation indicator (19) is formed as at least one projection.

4. Concrete screw (1) according to claim 2, wherein the at least one deformation indicator (19) is formed as at least one recess.

5. Concrete screw (1) according to any of the preceding claims, wherein a plurality of deformation indicators (19) are arranged on the first shaft (7) of the concrete screw (1).

6. Concrete screw (1) according to claim 5, wherein the plurality of deformation indicators (19) comprises at least one pair of deformation indicators (19).

7. Concrete screw (1) according to claim 6, wherein the plurality of deformation indicators (19) comprises a plurality of pairs of deformation indicators (19) arranged along the periphery of the first shaft (7) of the concrete screw (1).

8. Concrete screw (1) according to claim 2, wherein the deformation indicator (19) comprises at least one section of surface treated material on the first shaft (7) of the concrete screw (1).

## Patentansprüche

1. Betonschraube (1) für vorgebohrte Bohrlöcher, umfassend;
einen Kopfteil (3) umfassend ein Kopfelement (5), das so ausgebildet ist, dass es zu einem Montagewerkzeug passt,
einen ersten Schaft (7), der im Wesentlichen einheitlich stabförmig ist, aufweisend einen im Wesentlichen einheitlichen ersten Durchmesser (d1),
einen zweiten Schaft (9), der im Wesentlichen einheitlich stabförmig ist, aufweisend einen im Wesentlichen einheitlichen zweiten Durchmesser (d2),
einen Vorderabschnitt (11) umfassend eine Außenfläche (13) und ein Vorderende (15) und
einen im Wesentlichen einheitlichen dritten Außendurchmesser (d3) aufweisende Gewinde (17), wobei die Gewinde (17) am zweiten Schaft (9) und am Vorderabschnitt (11) angeordnet sind,
**dadurch gekennzeichnet, dass** der erste Schaft (7) zumindest einen am Umfang des ersten Schafts (7) angeordneten Verformungsanzeiger (19) umfasst.

2. Betonschraube (1) nach Anspruch 1, wobei der zumindest eine Verformungsanzeiger (19) sich in einer im Wesentlichen longitudinalen Richtung entlang des ersten Schafts (7) der Betonschraube (1) erstreckt.

3. Betonschraube (1) nach Anspruch 2, wobei der zumindest eine Verformungsanzeiger (19) als zumindest ein Vorsprung gestaltet ist.

4. Betonschraube (1) nach Anspruch 2, wobei der zumindest eine Verformungsanzeiger (19) als zumindest eine Ausnehmung gestaltet ist.

5. Betonschraube (1) nach einem der vorhergehenden Ansprüche, wobei eine Vielzahl von Verformungsanzeigern (19) am ersten Schaft (7) der Betonschraube (1) angeordnet ist.

6. Betonschraube (1) nach Anspruch 5, wobei die Vielzahl von Verformungsanzeigern (19) zumindest ein Paar von Verformungsanzeigern (19) umfasst.

7. Betonschraube (1) nach Anspruch 6, wobei die Vielzahl von Verformungsanzeigern (19) eine Vielzahl von Paaren von Verformungsanzeigern (19) umfasst, die entlang des Umkreises des ersten Schafts (7) der Betonschraube (1) angeordnet sind.

8. Betonschraube (1) nach Anspruch 2, wobei der Verformungsanzeiger (19) zumindest einen Abschnitt oberflächenbehandelten Materials am ersten Schaft (7) der Betonschraube (1) umfasst.

## Revendications

1. Vis pour béton (1) pour les forages pré-percés, comprenant;
une partie de tête (3) comprenant un élément de tête (5) adapté pour s'adapter à un outil de montage,
un premier arbre (7), en forme de tige essentiellement uniforme ayant un premier diamètre essentiellement uniforme (d1),
un deuxième arbre (9), en forme de tige essentiellement uniforme ayant un deuxième diamètre essentiellement uniforme (d2),
une section avant (11) comprenant une surface extérieure (13) et une extrémité avant (15), et
des filets (17) ayant un troisième diamètre extérieur essentiellement uniforme (d3), les filets (17) étant disposés sur le deuxième arbre (9) et la partie avant (11),
**caractérisée en ce que** le premier arbre (7) comprend au moins un indicateur de déformation (19) disposé sur la périphérie du premier arbre (7).

2. Vis pour béton (1) selon la revendication 1, dans laquelle l'au moins un indicateur de déformation (19) s'étend dans une direction essentiellement longitudinale le long du premier arbre (7) de la vis pour béton (1).

3. Vis pour béton (1) selon la revendication 2, dans laquelle l'au moins un indicateur de déformation (19) est formé comme au moins une saillie.

4. Vis pour béton (1) selon la revendication 2, dans laquelle l'au moins un indicateur de déformation (19) est formé comme au moins un évidement.

5. Vis pour béton (1) selon l'une quelconque des revendications précédentes, dans laquelle une pluralité d'indicateurs de déformation (19) est disposée sur le premier arbre (7) de la vis pour béton (1).

6. Vis pour béton (1) selon la revendication 5, dans laquelle la pluralité d'indicateurs de déformation (19) comprend au moins une paire d'indicateurs de déformation (19).

7. Vis pour béton (1) selon la revendication 6, dans laquelle la pluralité d'indicateurs de déformation (19) comprend une pluralité d'indicateurs de déformation (19) disposée le long de la périphérie du premier arbre (7) de la vis pour béton (1).

8. Vis pour béton (1) selon la revendication 2, dans laquelle l'indicateur de déformation (19) comprend au moins une partie de matériau traité en surface sur le premier arbre (7) de la vis pour béton (1).
